# EUROPEAN PATENT SPECIFICATION

(11) **EP 3 396 327 B1**
(45) Date of publication and mention of the grant of the patent: **19.02.2020**
(21) Application number: 17830665.0
(22) Date of filing: 19.04.2017
(51) Int. Cl.: G01D 5/244, G01L 3/10

(54) **ROTATION ANGLE DETECTOR AND TORQUE SENSOR**
DREHWINKELDETEKTOR UND DREHMOMENTSENSOR
DÉTECTEUR D'ANGLE DE ROTATION ET CAPTEUR DE COUPLE

(30) Priority: 20.07.2016 JP 2016142827
(43) Date of publication of application: 31.10.2018
(73) Proprietor: NSK Ltd., Tokyo 141-8560 (JP)
(72) Inventor: KUWAHARA Masaki, Fujisawa-shi Kanagawa 251-8501 (JP)
(74) Representative: Rings, Rolf
(86) International application number: PCT/JP2017/015716
(87) International publication number: WO 2018/016145

(56) References cited:
- EP-A1- 2 650 652
- GB-A- 2 505 226
- JP-A- 2008 151 774
- JP-A- 2011 220 848
- JP-A- 2012 122 963
- JP-A- 2012 149 909
- JP-A- 2013 101 023
- US-A- 4 660 021
- US-B1- 6 622 391

## Description

### Technical Field

The present invention relates to a rotation angle detector and a torque sensor.

### Background Art

Conventionally, there is, for example, a rotation angle detector, which is provided with a multipolar magnet ring and a plurality of magnetic sensors arranged along the circumferential direction of the multipolar magnet ring, and calculates a rotation angle of the multipolar magnet ring on the basis of angle information obtained from each magnetic sensor has been known (for example, see PTL 1 and PTL 2).

In addition, according to the technologies described in PTL 1 and PTL 2, the third harmonic component may be removed from the angle information. As a result, a more accurate rotation angle can be calculated.

A prior art according to US 6,622,391 B1 discloses an incremental rotary encoder as an angle measuring device for rotary components, in which a first sensor and a second sensor are provided, which are arranged so as to be opposite from each other with respect to the axis of rotation. The second sensor is offset from the first sensor so that the phase of an output voltage forming a detection signal is in advance or in delay with respect to the phase of the output voltage of the first sensor.

### Citation List

### Patent Literature

PTL 1: JP 2012-189375 A
PTL 2: JP 2011-503630 A

### Summary of Invention

### Technical Problem

However, although the third harmonic component (error component) can be removed by the technologies described in the above-mentioned PTL 1 and PTL 2, there is a potential that the fourth order error component may not be thoroughly removed from the angle information.

In view of the above, the present invention has an object to provide a rotation angle detector and a torque sensor that can reduce the fourth order error component to be included in the angle information.

### Solution to Problem

This problem is solved by means of a rotation angle detector according to claim 1, as well as by a torque sensor according to claim 5.

In order to solve the above problem, there is provided a rotation angle detector including: a multipolar magnet ring magnetized multipolarly along a circumferential direction; at least one magnetic sensor group including N (N is a natural number of 3 or higher, except 4) magnetic sensors being placed along the circumferential direction of the multipolar magnet ring, and outputting angle information in association with the rotation of the multipolar magnet ring, the respective pieces of the angle information output from the N magnetic sensors having a phase difference therebetween of 360/N degrees in an electrical angle; and an arithmetic unit configured to calculate a rotation angle of the multipolar magnet ring based on the angle information outputted from the N magnetic sensors included in the magnetic sensor group.

### Advantageous Effects of Invention

According to an aspect of the present invention, it is possible to shift the phase of a fourth order error component included in the angle information of each magnetic sensor. Therefore, by calculating the rotation angle of the multipolar magnet ring based on this angle information, the fourth order error component included in the angle information may be reduced.

### Brief Description of Drawings

FIG. 1 is a configuration diagram of the rotation angle detector according to the first embodiment;
FIGS. 2A to 2F are diagrams for illustrating a method of reducing a fourth order error component;
FIGS. 3A to 3D are diagrams for illustrating the action of the rotation angle detector of the first embodiment;
FIG. 4 is a configuration diagram of the rotation angle detector according to the second embodiment;
FIGS. 5A to 5D are diagrams for illustrating the action of the rotation angle detector according to the second embodiment;
FIGS. 6A to 6E are diagrams for illustrating a method of reducing a first order error component and a fourth order error component;
FIG. 7 is a configuration diagram of the rotation angle detector according to an example not being part of the present invention as defined in the appended claims;
FIGS. 8A to 8D are diagrams for illustrating the action of the rotation angle detector according to the example;
FIGS. 9A and 9B are diagrams for illustrating the action of the rotation angle detector according to the example;
FIG. 10 is a diagram for illustrating a modified example (1) of the above example;
FIGS. 11A and 11B are diagrams for illustrating the action of the abnormal sensor identification unit;
FIG. 12 is a diagram for illustrating a modified example (2) of the above example;
FIG. 13 is a configuration diagram of the rotation angle detector according to a further example;
FIG. 14 is a diagram for illustrating a modified example (1) of the example of Fig. 13; and
FIG. 15 is a diagram for illustrating a modified example (2) of the example of Fig. 13.

### Description of Embodiments

Hereinafter, an embodiment of the present invention will be described with reference to the accompanying drawings.

In addition, the following embodiments illustrate devices and methods to embody the technical idea of the present invention by way of example. The technical idea of the present invention is not limited to the shapes, structures, arrangements, or the like of the constituent components to those described below. The technical idea of the present invention can be subjected to a variety of modifications and changes within the technical scope prescribed by the claims.

### (First Embodiment)

### (Constitution)

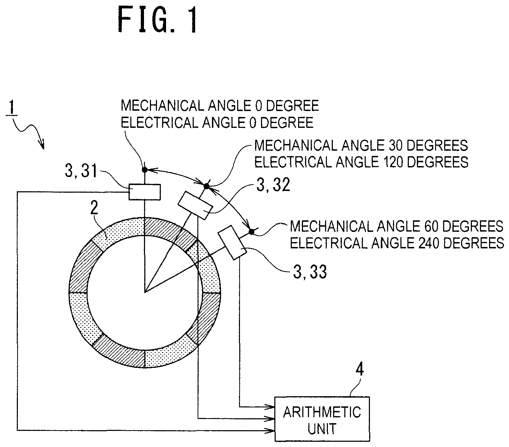

As illustrated in FIG. 1, the rotation angle detector 1 of the first embodiment includes a multipolar magnet ring 2, at least one magnetic sensor group including three magnetic sensors 3, and an arithmetic unit 4. In the example of FIG. 1, the number of magnetic sensor groups including three magnetic sensors 3 is one.

The multipolar magnet ring 2 is formed in a ring shape having a short axial length and is magnetized multipolarly along the circumferential direction. The magnetization direction of each magnetic pole is directed radially outward. The number of pole pairs of the multipolar magnet ring 2 is four. Further, a mechanical angle of 0 degrees is set between a predetermined pole pair out of the four pole pairs (in the example of FIG. 1, the pole pair at the top of the multipolar magnet ring 2).

Each of the three magnetic sensors 3 included in a magnetic sensor group is disposed along the circumferential direction of the multipolar magnet ring 2 facing the outer periphery of the multipolar magnet ring 2. Of the three magnetic sensors 3, the first magnetic sensor 31 is disposed at a position with a mechanical angle of 0 degrees, the second magnetic sensor 32 is disposed at a position with a mechanical angle of 30 degrees, and the third magnetic sensor 33 is disposed at a position with a mechanical angle of 60 degrees. Sensor ICs with the same specifications are used for the three magnetic sensors 3, each of which outputs as angle information the phase of a sinusoidal signal varying the phase in response to the rotation of the multipolar magnet ring 2. For example, an IC including a sinusoidal signal generation unit for generating a sinusoidal signal (original signal) in response to the rotation of the multipolar magnet ring 2, and a phase output unit for outputting the phase of a generated sinusoidal signal may be adopted.

As described above, the number of pole pairs of the multipolar magnet ring 2 is four, and the respective positions of the magnetic sensors 3 are shifted by 30 degrees in terms of mechanical angle. Therefore, the angle information outputted from the respective three magnetic sensors 3 has a phase difference different from each other by 120 degrees in terms of electrical angle. For example, when the angle information outputted from the first magnetic sensor 31 has a phase of 0 degrees, the angle information outputted from the second magnetic sensor 32 has a phase of 120 degrees, and the angle information outputted from the third magnetic sensor 33 has a phase of 240 degrees.

Also, at each position where any of the magnetic sensors 3 is disposed, since the number of pole pairs is four, four cycles of a magnetic field is generated during one revolution of the multipolar magnet ring 2. Therefore, each of the magnetic sensors 3 generates angle information for four cycles during one revolution of the multipolar magnet ring 2 and outputs the same to the arithmetic unit 4.

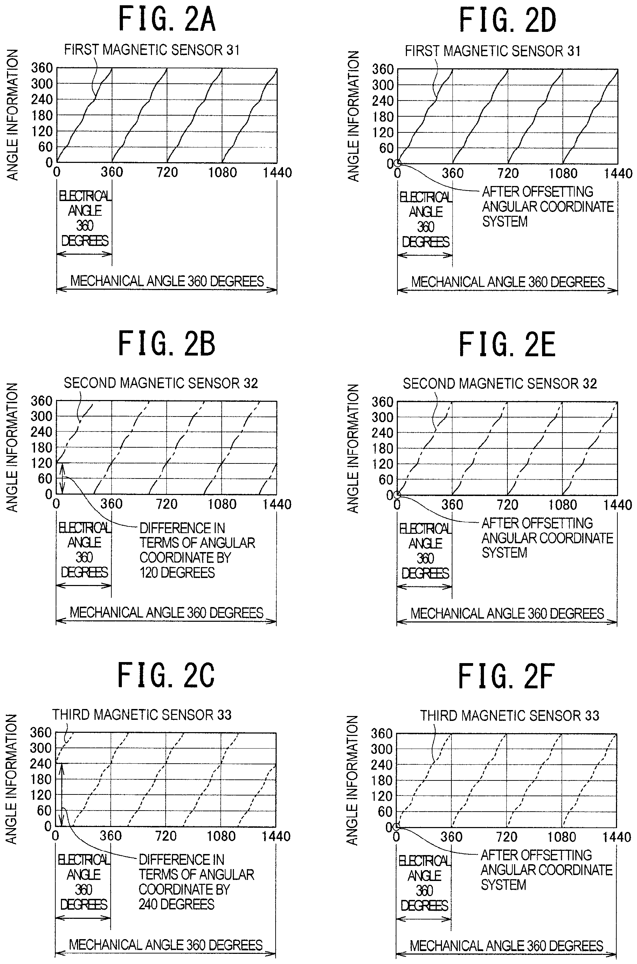

The angle information outputted from the respective three magnetic sensors 3 is different from each other by 120 degrees, as illustrated in FIGS. 2A to 2C. Therefore, the arithmetic unit 4 firstly offsets the amount of the difference, that is, the phase difference between each angle information outputted from the three magnetic sensors 3 constituting a magnetic sensor group. More specifically, as illustrated in FIGS. 2D to 2F, the coordinate system of the angle information outputted from the first magnetic sensor 31 is used as a reference, a coordinate value corresponding to 120 degrees is added to the coordinate system of the angle information outputted from the second magnetic sensor 32, and a coordinate value corresponding to 240 degrees is added to the coordinate system of the angle information outputted from the third magnetic sensor 33 to synchronize the three coordinate systems. Subsequently, the arithmetic unit 4 calculates the total value of the angle information after offsetting, and divides the calculated total value by "3" to obtain the average value of the angle information. Then, the calculated average value is defined as a detection value (true value) of the angle information (electrical angle), and a rotation angle (mechanical angle) of the multipolar magnet ring 2 is calculated based on the detection value (true value).

### (Action and others)

In general, an angle error of angle information detected by a combination of a multipolar magnet ring 2 and a magnetic sensor 3 may be reduced, when the original signal is a sinusoidal wave. However, as obvious from FIGS. 2A to 2C, such angle information is apt to be superimposed with a fourth order error component per one cycle of an electrical angle. The superimposed fourth order error component becomes a main factor preventing high accuracy angle information.

The cause of this superposition of a fourth order error is that the third and fifth harmonic components tend to superimpose on an original signal detected by the magnetic sensor 3, and for improvement precise works with respect to magnetization accuracy, element arrangement accuracy, adjustment of detection element characteristics, etc. are required. Although it is conceivable to reduce the error by disposing a large number of magnetic sensors 3, increase in the number of the magnetic sensors 3 increases also cost.

Further, it is also possible to apply a so-called technology of three-phase to two-phase conversion for reduction of the third harmonic component. However, this three-phase to two-phase conversion technology does not contribute to reduction of a fifth harmonic component. Although a fifth harmonic component is smaller compared to a third harmonic, it still remains as a cause of an error.

On the other hand, in the rotation angle detector 1 of the first embodiment, as illustrated in FIGS. 1, and 2A to 2C, three magnetic sensors 3 constituting a magnetic sensor group are arranged so as to output angle information having a phase difference different from each other by 120 degrees in terms of electrical angle in response to the revolution of the multipolar magnet ring 2. Therefore, the phase of a fourth order error component included in the angle information of the respective magnetic sensors 3 may be shifted. Therefore, by calculating a rotation angle of the multipolar magnet ring 2 based on the angle information, it is possible to reduce a fourth order error component included in the angle information of the magnetic sensor 3.

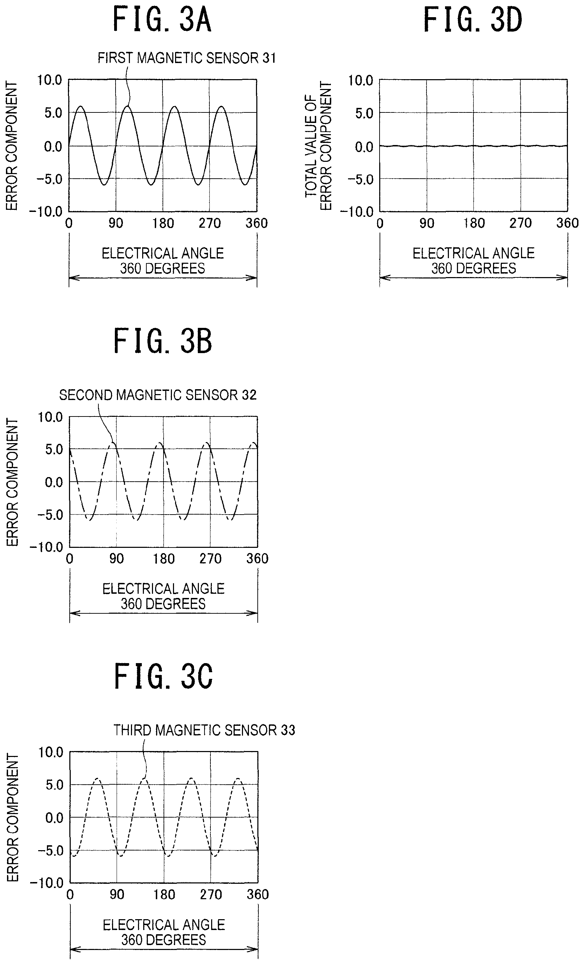

Further, in the rotation angle detector 1 of the first embodiment, the phase difference of the angle information outputted from the magnetic sensor 3 is offset. Therefore, after offsetting, the respective fourth order error components included in the angle information of the magnetic sensors 3 have waveforms shifted in phase, as illustrated in FIGS. 3A to 3C. Therefore, by calculating an average value by dividing the total value of the angle information by "3", the fourth order error components may be reduced by canceling each other as illustrated in FIG. 3D.

### (Second Embodiment)

Next, the rotation angle detector 1 according to the second embodiment will be described. The same signs are used for the same component, etc. as in the first embodiment, and the details thereof are omitted.

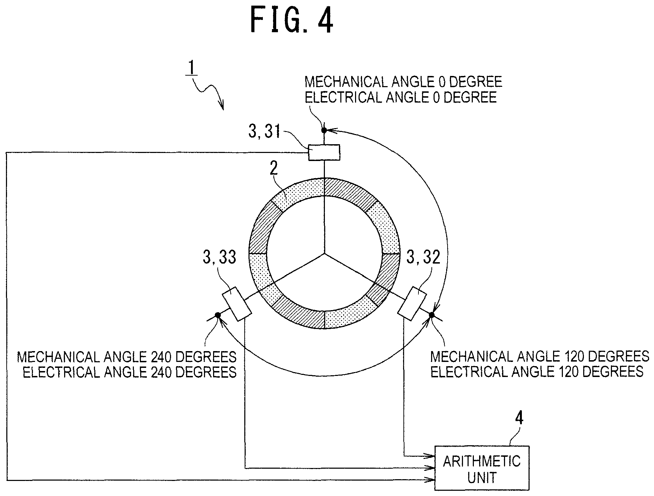

In the second embodiment, as illustrated in FIG. 4 differently from the first embodiment, the three magnetic sensors 3 are disposed such that the angle information outputted from the three magnetic sensors 3 has a phase difference in electrical angle different from each other by 120 degrees, and they are positioned along the circumferential direction of the multipolar magnet ring 2 at equal intervals. In the example of FIG. 4, the first magnetic sensor 31 is positioned at a mechanical angle of 0 degrees, the second magnetic sensor 32 at a mechanical angle of 120 degrees, and the third magnetic sensor 33 at a mechanical angle of 240 degrees.

Other configurations are the same as those in the first embodiment.

### (Action and others)

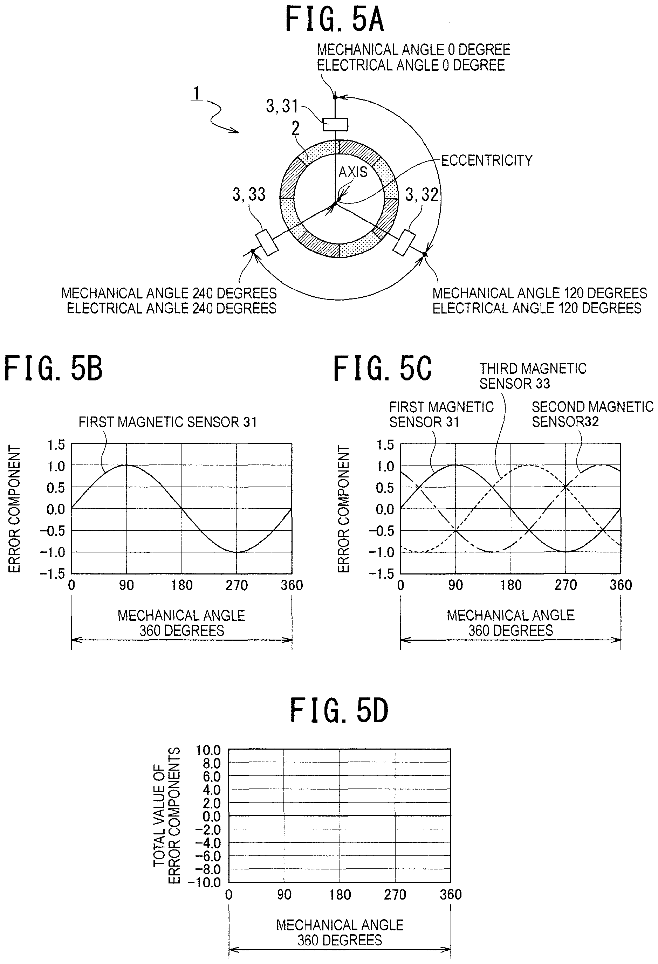

In the rotation angle detector 1, when, for example, the multipolar magnet ring 2 is eccentric as illustrated in FIG. 5A, a mechanical angle obtained from the magnetic sensor 3 usually contains a first order error component over the whole mechanical angle namely from 0 through 360 degrees as illustrated in FIG. 5B.

In contrast in the rotation angle detector 1 of the second embodiment, three magnetic sensors 3 are disposed at equal intervals, namely at positions different from each other by 120 degrees in terms of mechanical angle. Therefore, the respective phases of the first order error component contained in the mechanical angle obtained from the magnetic sensors 3 may be shifted by 120 degrees as illustrated in FIG. 5C. Consequently, by calculating the average value of the mechanical angles, the first order error may be canceled out as illustrated in FIG. 5D, so that a rotation angle may be detected more accurately.

Meanwhile, in the rotation angle detector 1 of the second embodiment, it is possible to cancel out an error component of the order other than multiples of 3 in addition to the first order error component. For example, since the error component of the electrical angle of the first embodiment is a fourth order error component, when the number of pole pairs is four, it appears as a 16th order error component over the whole mechanical angle. Since it has an order other than multiples of 3, it may be cancelled out.

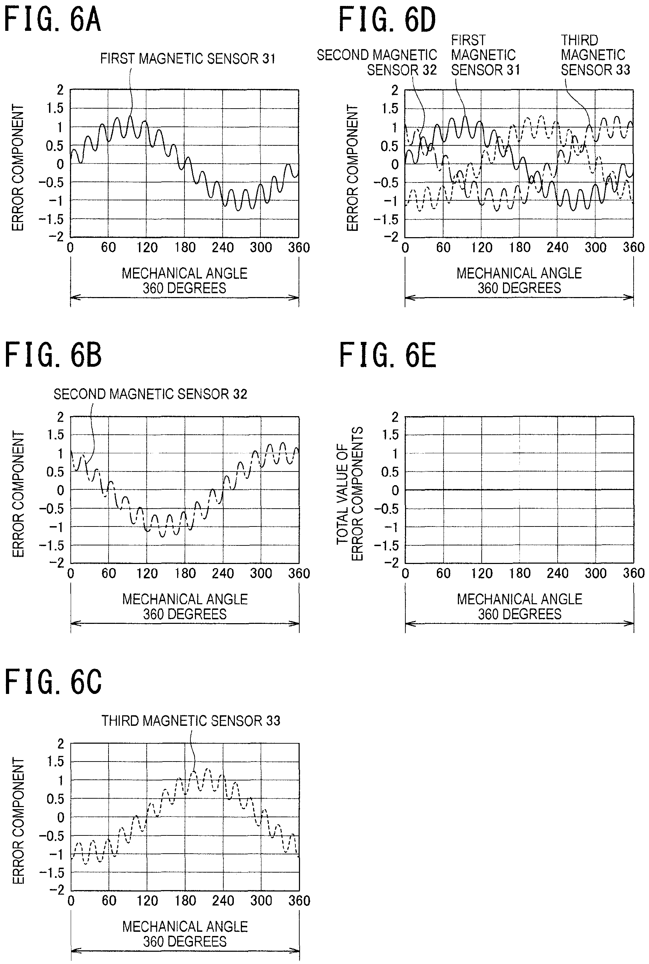

For example, when a first order error component is included over the whole mechanical angle in addition to a fourth order error component in an electrical angle (16th order error component over the whole mechanical angle) as illustrated in FIGS. 6A to 6C, an error component in the mechanical angle obtained from the second magnetic sensor 32 has a phase shifted by 120 degrees from an error component in the mechanical angle obtained from the first magnetic sensor 31. Similarly, an error component in the mechanical angle obtained from the third magnetic sensor 33 has a phase shifted by 240 degrees from the error component in the mechanical angle obtained from the first magnetic sensor 31. Therefore, as illustrated in FIGS. 6D and 6E, when error components of the respective magnetic sensors 3 (31, 32, and 33) are synthesized, both the first order error component and the 16th order error component may be canceled.

Further, in the rotation angle detector 1 of the second embodiment, the canceling effect of error components is not limited to the mentioned orders (1st order, and 16th order in a mechanical angle), and a second order error component in a mechanical angle, a second order error component in an electrical angle (8th order error component in a mechanical angle), etc. may be also canceled out.

Although cases where the number of pole pairs of the multipolar magnet ring 2 is 4 have been described in the first embodiment and the second embodiment, any number of pole pairs may be selected insofar as it is so structured that the angle information outputted from the three magnetic sensors 3 includes a phase difference different from each other by 120 degrees in electrical angle, when the three magnetic sensors 3 are disposed at positions different by 120 degrees in mechanical angle. Examples of the number of pole pairs to be adopted may include 4, 8, 10, 11, 13, 14, 16, 17, 19, 20, and 22.

Although an example is shown in which three magnetic sensors 3 constitute a magnetic sensor group, another constitution may be adopted. For example, in a case where an error component of an order other than a multiple of N (N is a natural number of 3 or higher, except 4) is to be cancelled out, the number of magnetic sensors 3 may be a number corresponding to the order of an error component, such as N. In this case, the phases of the error components of mechanical angles obtained from the magnetic sensors 3 may be shifted by 360/N degrees. The number of pole pairs of the multipolar magnet ring 2 should be a pole pair number in which angle information outputted from the N pieces of magnetic sensors 3 comes to have a phase difference different from each other by 360/N degrees in an electrical angle. Then, the arithmetic unit 4 calculates the average value of a mechanical angle obtained from the N pieces of magnetic sensors 3, and performs calculation to obtain a detection value (true value) of the rotation angle of the multipolar magnet ring 2. In this regard, when the number of the magnetic sensors 3 is four, each phase difference is 90 degrees, and it becomes difficult to reduce the fourth order error component. Therefore, this case (N = 4) is excluded from the present invention.

Next, the rotation angle detector 1 according to an example not covered by the appended claims will be described. The same signs are used for the same component, etc. as in the first embodiment, and the details thereof are omitted.

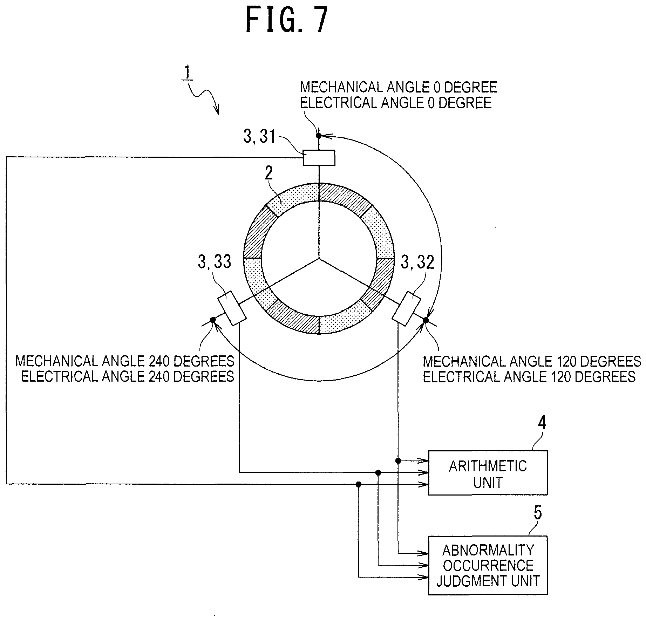

As illustrated in FIG. 7 the example is different from the first embodiment in that the same is further provided with an abnormality occurrence judgment unit 5 configured to judge whether or not abnormality has occurred in any one of the N pieces of magnetic sensors 3 (N is a natural number of 3 or higher, excluding 4). In addition, similarly to the second embodiment, the N pieces of magnetic sensors 3 are placed at equal intervals along the circumferential direction of the multipolar magnet ring 2, namely such that the phases of a mechanical angle are different from each other by 120 degrees. In the example of FIG. 7, the N is set at 3.

Specifically, as illustrated in FIGS. 2A to 2F, the abnormality occurrence judgment unit 5 judges whether or not abnormality has occurred in any one of the three magnetic sensors 3 based on a calculated total value obtained by offsetting predicted phase differences (120 degrees, or 240 degrees) of the angle information outputted from the three magnetic sensors 3, and calculating a total value of the angle information after offsetting. For example, it monitors whether or not the total value of the angle information after offsetting is equal to three times the angle information outputted from the first magnetic sensor 31, three times the angle information outputted from the second magnetic sensor 32, and three times the angle information outputted from the the third magnetic sensor 33 (hereinafter also referred to as "3×α, 3×β, and 3×γ").

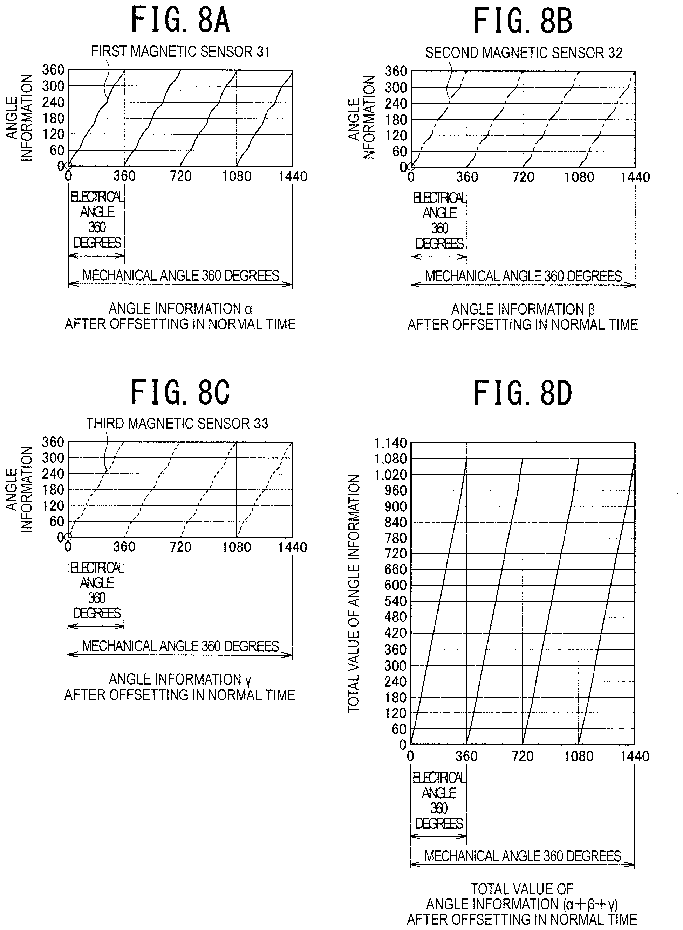

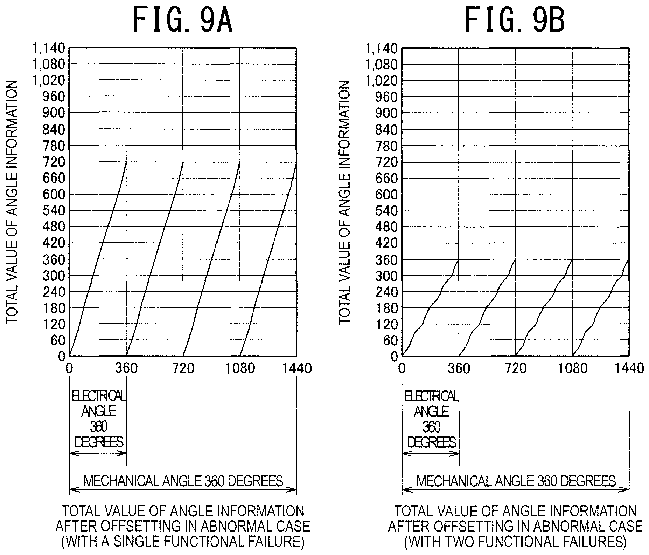

In this regard, when there is no functional failure in the three magnetic sensors 3, as illustrated in FIGS. 8A to 8D, the total value of the angle information after offsetting is equal to each of 3×α, 3×β, and 3×γ. On the other hand, when a functional failure occurs in one or two of the magnetic sensors 3 and the angle information becomes zero or the like, the total value becomes not equal to any of 3×α, 3×β, and 3×γ as illustrated in FIGS. 9A and 9B. Therefore, the abnormality occurrence judgment unit 5 judges that abnormality has occurred in any of the three magnetic sensors 3, when it judges that the total value of the angle information outputted from the magnetic sensor 3 after offsetting is not equal to any of 3×α, 3×β, and 3×γ. In this way, it is relatively easy to confirm that abnormality has occurred in any of the 3 magnetic sensors.

Other configurations are the same as those in the first embodiment.

### (Modification)

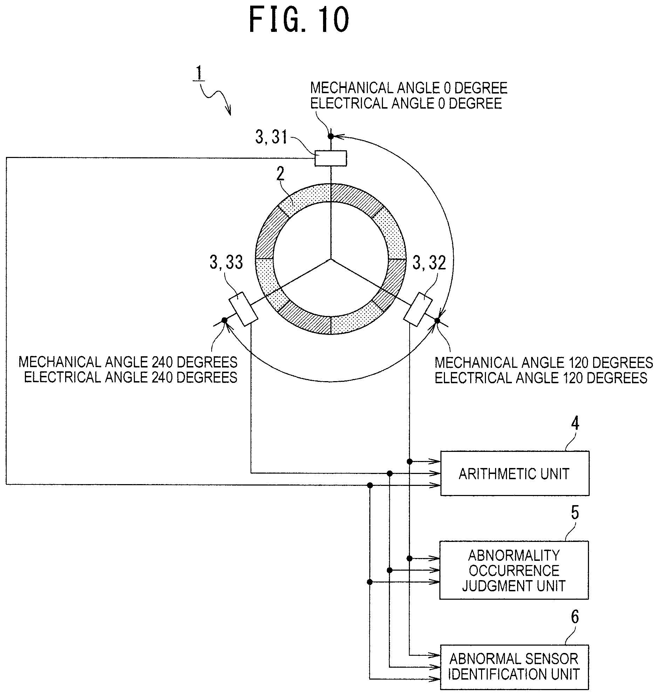

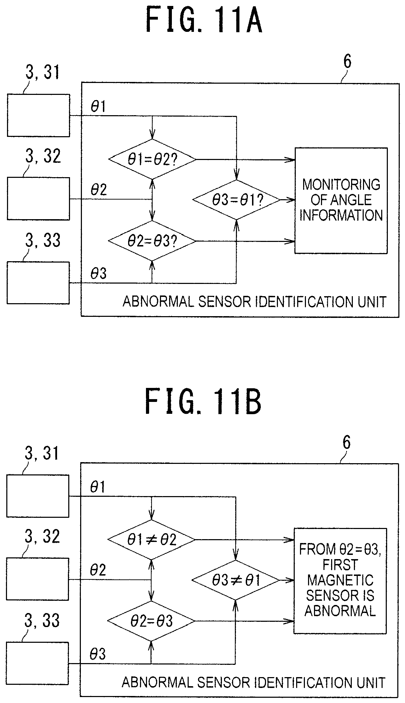

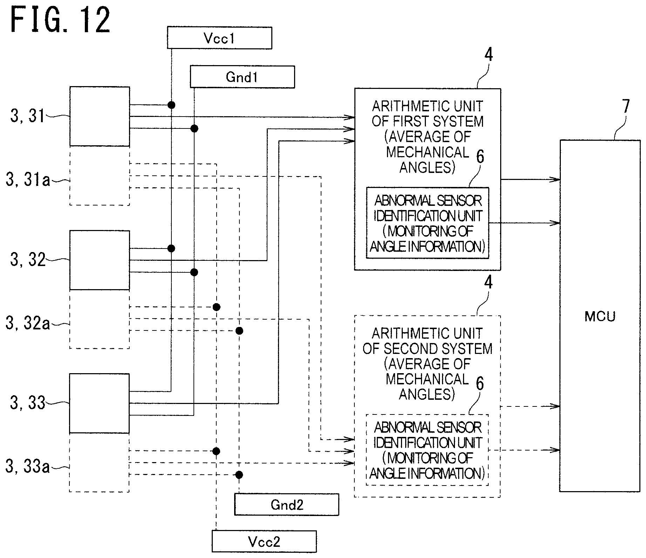

(1) Although an example in which an abnormality occurrence judgment unit 5 judges whether or not abnormality has occurred in any of the N pieces of magnetic sensors 3 is described in the example, another configuration may be also adopted. For example, as illustrated in FIG. 10, it is possible to use a configuration including further an abnormal sensor identification unit 6, which identifies a magnetic sensor 3 suffering abnormality out of N pieces of magnetic sensors 3 (N is a natural number of 3 or higher, excluding 4). In the example of FIG. 10, the N is set at 3. Specifically, as illustrated in FIGS. 2A to 2F, the abnormal sensor identification unit 6 offsets predicted phase difference (120 degrees, or 240 degrees) of the angle information outputted from the three magnetic sensors 3. Subsequently, on the basis of the difference between the data of angle information after offsetting corresponding to two magnetic sensors 3 selected from the three magnetic sensors 3, a magnetic sensor 3 suffering abnormality is identified among the three magnetic sensors 3.
   More specifically, as illustrated in FIG. 11A, it is monitored whether the difference between the output signal (angle information) θ1 of the first magnetic sensor 31 after offsetting and the output signal (angle information) θ2 of the second magnetic sensor 32 after offsetting is smaller than a predetermined threshold value, and is nearly zero (including zero). Similarly, it is monitored whether the difference between the output signal (angle information) θ2 of the second magnetic sensor 32 after offsetting and the output signal (angle information) θ3 of the third magnetic sensor 33 after offsetting is smaller than the threshold value, and is nearly zero. It is also monitored whether the difference between the output signal θ3 of the third magnetic sensor 33 after offsetting and the output signal θ1 of the first magnetic sensor 31 after offsetting is smaller than the threshold value, and is nearly zero.
   When there is no functional failure in the three magnetic sensors 3, each of the differences becomes nearly zero. However, when a functional failure occurs in one of the magnetic sensors 3 and the angle information becomes zero or so, only a difference involving the output signal (angle information) of the malfunctioned magnetic sensor 3 has a value deviated from zero. Consequently, when the abnormal sensor identification unit 6 judges that there is a non-zero combination, it identifies also a magnetic sensor 3 in which abnormality has occurred among the three magnetic sensors 3 based on the non-zero combinations. In this way the magnetic sensor 3 in which abnormality has occurred can be discriminated relatively easily.
   In the case of FIG. 11B, where the first magnetic sensor 31 is malfunctioning, the difference between the output signal (angle information) 92 of the second magnetic sensor 32 and the output signal (angle information) θ3 of the third magnetic sensor 33 becomes zero, which makes it possible to judge that the first magnetic sensor 31 is malfunctioning.
(2) Further, for example, as illustrated in FIG. 12, the rotation angle detector 1 may be configured to include at least two systems of magnetic sensor groups. For example, two systems each including N (e.g. 3) pieces of magnetic sensors 3 constituting a magnetic sensor group are insulated and placed in an IC package. In the example of FIG. 12, there are a first system including the first, second, and third magnetic sensors represented by signs 31, 32, and 33, and a second system including the first, second, and third magnetic sensors represented by signs 31a, 32a, and 33a. In the rotation angle detector 1, a power supply voltage Vcc1, and a ground voltage Gnd1 for the first to third magnetic sensors 31 to 33 of the first system, and a power supply voltage Vcc2 and a ground voltage Gnd2 for the first to third magnetic sensors 31a to 33a of the second system are provided separately.

In this case, when the arithmetic unit 4 judges abnormality of a magnetic sensor 3 included in either of the two systems, the arithmetic unit 4 calculates a rotation angle (mechanical angle) of the multipolar magnet ring 2 using the angle information outputted from the three magnetic sensors 3 of the other system. In the example of FIG. 12, judgment of occurrence of abnormality of a magnetic sensor 3 (monitoring of angle information) is performed in each of the first system and the second system using the aforedescribed abnormal sensor identification unit 6. In this angle information monitoring, when it is judged that abnormality has occurred in a magnetic sensor 3, a flag is set indicating the magnetic sensor 3 in which abnormality has occurred. In the example of FIG. 12, the abnormal sensor identification unit 6 is provided in the arithmetic unit 4.

Then a MCU (Micro Controller Unit) 7 judges which one of the magnetic sensors 3 of the first system and the magnetic sensors 3 of the second system suffers abnormality on the basis of the set flag. Subsequently, the MCU 7 calculates a rotation angle (mechanical angle) of the multipolar magnet ring 2 using the angle information outputted from the 3 (N) pieces of magnetic sensors 3 of the system not suffering abnormality (normal system). By this means, the detection function for a rotation angle may be continued using a normal system.

Next, the rotation angle detector 1 according to a further example will be described. The same signs are used for the same component, *etc*. as in the first embodiment, and the details thereof are omitted.

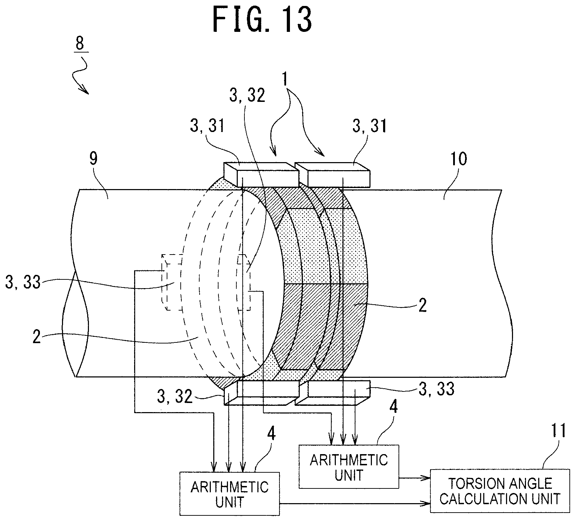

The further example is, as illustrated in FIG. 13, different from the first embodiment in that a torque sensor 8 for detecting a torsion angle between the input axis 9 and the output axis 10 connected via a torsion bar is constituted by using two rotation angle detectors 1 and a torsion angle calculation unit 11. Further, similarly to the second embodiment and the above first example, the three magnetic sensors 3 are placed at equal intervals along the circumferential direction of the multipolar magnet ring 2, namely such that the phase of a mechanical angle is different from each other by 120 degrees.

Specifically, a rotation angle detector 1 is disposed on each of the input axis 9 and the output axis 10. The multipolar magnet ring 2 of the rotation angle detector 1 for the input axis 9 is fixed coaxially with the input axis 9 and rotates coupled with the rotation of the input axis 9. Further, the multipolar magnet ring 2 of the rotation angle detector 1 for the output axis 10 is fixed coaxially with the output axis 10, and rotates coupled with the rotation of the output axis 10. By this means, each of the rotation angle detectors 1 detect the rotation angle of the input axis 9 and the rotation angle of the output axis 10.

The torsion angle calculation unit 11 calculates a difference between a rotation angle of the input axis 9 and a rotation angle of the output axis 10 detected by the rotation angle detectors 1 as a torsion angle that is proportional to the torque. In this way, a torsion angle (torque) can be detected with higher accuracy. In the case of application to an electric power steering device, when the input axis and the output axis of the steering system of a vehicle are used respectively as the input axis 9 and the output axis 10, a steering operation may be assisted by controlling the motor power based on the calculated torsion angle. In this case, even if the multipolar magnet ring 2 is eccentric due to vibration generated in the input axis and the output axis of the steering system as the vehicle travels, the rotation angle may be detected more accurately. Therefore, it is possible to assist a steering operation with higher accuracy in the long term.

Other configurations are the same as those in the first embodiment.

### (Modification)

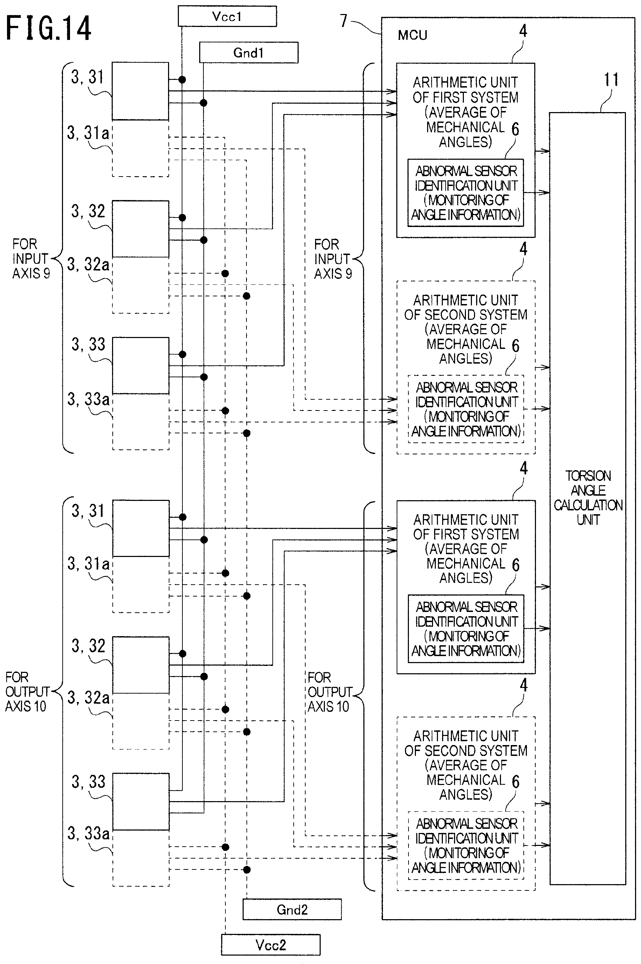

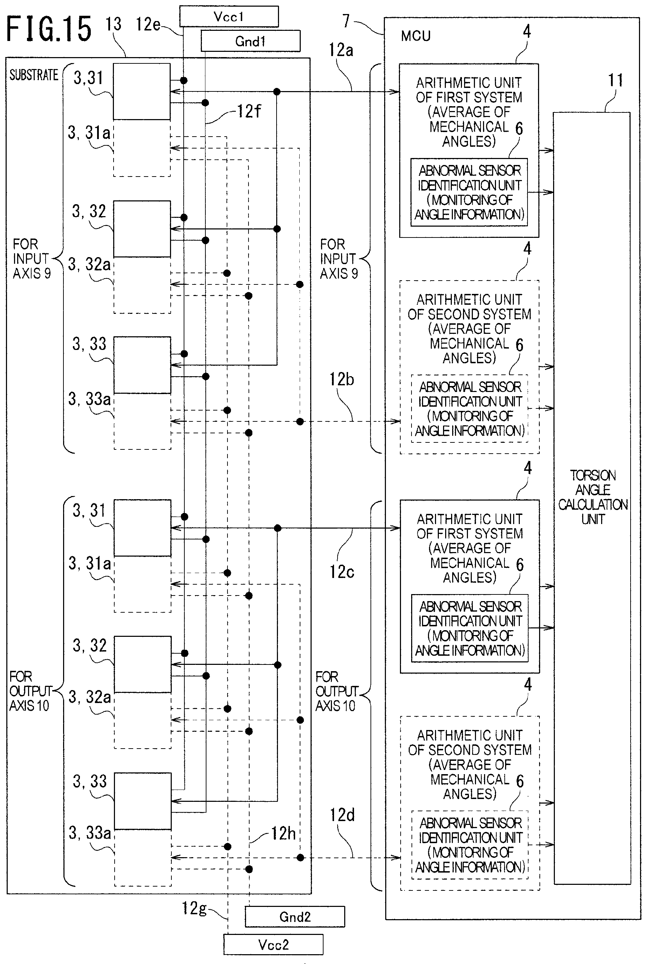

(1) As illustrated in FIG. 14, the rotation angle detector 1 may be the rotation angle detector 1 that is able to detect abnormality of a magnetic sensor 3 as described in the above first example and its modification. In the example of FIG. 14, arithmetic units 4 of the first system and the second system and a torsion angle calculation unit 11 are provided in the MCU 7, and further abnormal sensor identification units 6 are provided in the arithmetic units 4.
(2) Further, for example, the MCU 7 may be configured such that an IC discriminating function enabling identification of a magnetic sensor 3 (sensor IC) is added to the communication function between the magnetic sensor 3 (sensor IC) and the MCU 7. In this case, the MCU 7 is configured to be able to designate an IC (magnetic sensor 3) to be communicated with.
   In the example of FIG. 15, there are provided a first common signal line 12a that enables communication between the magnetic sensors 31, 32, 33 of the first system for the input axis 9 and the MCU 7, and a second common signal line 12b that enables communication between the magnetic sensors 31a, 32a, 33a of the second system for the input axis 9 and the MCU 7.
   Similarly, there are provided a third common signal line 12c that enables communication between the magnetic sensors 31, 32, 33 of the first system for the output axis 10 and the MCU 7, and a fourth common signal line 12d that enables communication between the magnetic sensors 31a, 32a, 33a of the second system for the output axis 10 and the MCU 7.
   Further, a fifth common signal line 12e for supplying a power supply voltage Vcc1 to the first to third magnetic sensors 31, 32, and 33 of the first system, and a sixth common signal line 12f for supplying a ground voltage Gnd1 are provided. In addition, a seventh common signal line 12g for supplying a power supply voltage Vcc2 to the first to third magnetic sensors 31a, 32a, and 33a of the second system, and an eighth common signal line 12h for supplying a ground voltage Gnd 2 are provided. With such a configuration, signal lines can be integrated on the substrate 13 on which the first to third magnetic sensors 31, 32, and 33 of the first system and the first to third magnetic sensors 31a, 32a, and 33a of the second system are disposed, so that the number of signal lines can be reduced to eight lines.
   The configuration in FIG. 15 may be constituted with two systems in a single package including totally six pairs of magnetic sensors 3 (three pairs for the input axis 9 and three pairs for the output axis 10) . Further, in the example of FIG. 15, each system is monitored, and even if abnormality occurs in one system, the other can function, and calculation of a torsion angle and assistance of steering operation, as well as monitoring of each system after occurrence of abnormality can be continued.
(3) Further, the magnetic sensor 3 may be provided with a function as a magnetic pole counter for counting magnetic poles. This makes it possible to count the revolutions of the input axis 9 or the output axis 10.
(4) Further, in the above example, the magnetization direction of the multipolar magnet ring 2 is directed radially outward, and the magnetic sensors 3 are disposed facing the outer periphery of the multipolar magnet ring 2, however other configurations may be adopted. For example, there is no particular restriction on the magnetization direction and the magnetization direction may be directed radially inward, upward, or downward. In this case, the magnetic sensors 3 are disposed to face the magnetization direction (magnetization plane).
(5) Although an example case where a sensor in which a pole pair of a multipolar magnet ring 2 corresponds to an electrical angle of 360 degrees is used as the magnetic sensor 3 is described in the above example, another configuration may be adopted. For example, a sensor in which one pole of a multipolar magnet ring 2 corresponds to an electrical angle of 360 degrees may be used. The rotation angle detector 1 of the present invention may be used for an application other than the magnetic circuit of the above example.

### Reference Signs List

- 1: Rotation angle detector
- 2: Multipolar magnet ring
- 3: Magnetic sensor
- 4: Arithmetic unit
- 5: Abnormality occurrence judgment unit
- 6: Abnormal sensor identification unit
- 7: MCU
- 8: Torque sensor
- 9: Input axis
- 10: Output axis
- 11: Torsion angle calculation unit
- 31, 31a: First magnetic sensor
- 32, 32a: Second magnetic sensor
- 33, 33a: Third magnetic sensor

## Claims

1. A rotation angle detector (1) comprising:
a multipolar magnet ring (2) magnetized multipolarly along a circumferential direction;
at least one magnetic sensor group including N; N being a natural number of 3 or higher, except 4, magnetic sensors (3) being placed along the circumferential direction of the multipolar magnet ring (2), and outputting angle information in association with the rotation of the multipolar magnet ring (2), the respective pieces of the angle information output from the N magnetic sensors (3) having a phase difference therebetween of 360/N degrees in an electrical angle; and
an arithmetic unit (4) configured to calculate an average value of the angle information outputted from the N magnetic sensors (3) included in the magnetic sensor group, and to calculate a rotation angle of the multipolar magnet ring (2) based on the calculated average value, wherein
the arithmetic unit (4) is configured to offset the phase difference of the angle information outputted from the N magnetic sensors (3) included in the magnetic sensor group, to calculate a total value of the angle information after offsetting, and to obtain the average value by dividing the calculated total value by N.

2. The rotation angle detector (1) according to claim 1 comprising at least two systems of magnetic sensor groups, each of the magnetic sensor groups serving as the magnetic sensor group,
wherein, when the arithmetic unit (4) judges abnormality of a magnetic sensor included in either of the two systems, the arithmetic unit (4) calculates the rotation angle using the angle information outputted from the N magnetic sensors (3) of another system of the two systems.

3. The rotation angle detector (1) according to claim 1 or 2, wherein the magnetic sensors (3) are placed at equal intervals along the circumferential direction of the multipolar magnet ring (2).

4. The rotation angle detector (1) according to any one of claims 1 to 3, wherein N is 3.

5. A torque sensor (11) comprising rotation angle detectors (1) each of which is a rotation angle detector (1) according to any one of claims 1 to 4, wherein
the rotation angle detectors (1) are disposed on an input axis (9) and an output axis (10) connected via a torsion bar, respectively, to detect a rotation angle of the input axis (9) and a rotation angle of the output axis (10), and
the torque sensor (11) is configured to calculate a difference between the rotation angle of the input axis (9) and the rotation angle of the output axis (10) detected by the rotation angle detectors (1) as a torsion angle.

6. The torque sensor (11) according to claim 5, wherein the input axis (9) and the output axis (10) are respectively an input axis (9) and an output axis (10) of a steering system of a vehicle.

## Patentansprüche

1. Drehwinkeldetektor (1) umfassend:
einen multipolaren Magnetring (2), der entlang einer Umfangsrichtung multipolar magnetisiert ist;
mindestens eine magnetische Sensorgruppe enthaltend N; wobei N eine natürliche Zahl von 3 oder höher mit Ausnahme von 4 ist, wobei Magnetsensoren (3) entlang der Umfangsrichtung des mehrpoligen Magnetrings (2) angeordnet sind und Winkelinformationen in Verbindung mit der Drehung des mehrpoligen Magnetrings (2) ausgeben, wobei die jeweiligen Teile der Winkelinformation, die von den N Magnetsensoren (3) ausgegeben werden, eine Phasendifferenz zwischen ihnen von 360/N Grad in einem elektrischen Winkel aufweisen; und
eine Recheneinheit (4), die konfiguriert ist, um einen Durchschnittswert der Winkelinformation, die von den N Magnetsensoren (3) ausgegeben wird, die in der Magnetsensorgruppe enthalten sind zu berechnen, und um einen Drehwinkel des mehrpoligen Magnetrings (2) basierend auf dem berechneten Durchschnittswert zu berechnen, wobei
die Recheneinheit (4) konfiguriert ist, um die Phasendifferenz der Winkelinformation zu versetzen, welche von den in der Magnetsensorgruppe enthaltenen N Magnetsensoren (3) ausgegeben wird, einen Gesamtwert der Winkelinformation nach dem Versetzen zu berechnen und den Durchschnittswert durch Division des berechneten Gesamtwertes durch N zu erhalten.

2. Drehwinkeldetektor (1) nach Anspruch 1 mit mindestens zwei Systemen magnetischer Sensorgruppen, wobei jede der magnetischen Sensorgruppen als magnetische Sensorgruppe dient.
wobei, wenn die Recheneinheit (4) eine Abnormalität eines Magnetsensors beurteilt, der in einem der beiden Systeme enthalten ist, die Recheneinheit (4) den Drehwinkel unter Verwendung der Winkelinformation berechnet, die von den N Magnetsensoren (3) eines anderen Systems der beiden Systeme ausgegeben wird.

3. Drehwinkeldetektor (1) nach Anspruch 1 oder 2, wobei die Magnetsensoren (3) in gleichen Abständen entlang der Umfangsrichtung des mehrpoligen Magnetrings (2) angeordnet sind.

4. Drehwinkeldetektor (1) nach einem der Ansprüche 1 bis 3, wobei N 3 ist.

5. Drehmomentsensor (11) mit Drehwinkeldetektoren (1), von denen jeder ein Drehwinkeldetektor (1) nach einem der Ansprüche 1 bis 4 ist, wobei
die Drehwinkeldetektoren (1) auf einer Eingangsachse (9) und einer Ausgangsachse (10) angeordnet sind, die jeweils über einen Torsionsstab verbunden sind, um einen Drehwinkel der Eingangsachse (9) und einen Drehwinkel der Ausgangsachse (10) zu erfassen und
der Drehmomentsensor (11) konfiguriert ist, um eine Differenz zwischen dem Drehwinkel der Eingangsachse (9) und dem Drehwinkel der Ausgangsachse (10), der von den Drehwinkeldetektoren (1) erfasst wird, als einen Torsionswinkel zu berechnen.

6. Drehmomentsensor (11) nach Anspruch 5, wobei die Eingangsachse (9) und die Ausgangsachse (10) jeweils eine Eingangsachse (9) und eine Ausgangsachse (10) eines Lenksystems eines Fahrzeugs sind.

## Revendications

1. Détecteur d'angle de rotation (1) comprenant :
une bague magnétique multipolaire (2) magnétisée de manière multipolaire le long d'une direction circonférentielle ;
au moins un groupe de capteurs magnétiques comprenant N ; N étant un nombre entier naturel supérieur ou égal à 3, à l'exception de 4, capteurs magnétiques (3) placés le long de la direction circonférentielle de la bague magnétique multipolaire (2), et délivrant des informations d'angle en association avec la rotation de la bague magnétique multipolaire (2), les éléments respectifs des informations d'angle provenant des N capteurs magnétiques (3) ayant une différence de phase entre eux de 360/N degrés en angle électrique ; et
une unité arithmétique (4) configurée pour calculer une valeur moyenne des informations d'angle délivrées par les N capteurs magnétiques (3) inclus dans le groupe de capteurs magnétiques, et pour calculer un angle de rotation de la bague magnétique multipolaire (2) sur la base de la valeur moyenne calculée, dans lequel
l'unité arithmétique (4) est configurée pour décaler la différence de phase des informations d'angle délivrées par les N capteurs magnétiques (3) inclus dans le groupe de capteurs magnétiques, pour calculer une valeur totale des informations d'angle après le décalage, et pour obtenir la valeur moyenne en divisant la valeur totale calculée par N.

2. Détecteur d'angle de rotation (1) selon la revendication 1 comprenant au moins deux systèmes de groupes de capteurs magnétiques, chacun des groupes de capteurs magnétiques servant en tant que groupe de capteurs magnétiques,
dans lequel, lorsque l'unité arithmétique (4) juge une anomalie d'un capteur magnétique inclus dans l'un ou l'autre des deux systèmes, l'unité arithmétique (4) calcule l'angle de rotation en utilisant les informations d'angle délivrées par les N capteurs magnétiques (3) d'un autre système des deux systèmes.

3. Détecteur d'angle de rotation (1) selon la revendication 1 ou 2, dans lequel les capteurs magnétiques (3) sont placés à des intervalles égaux le long de la direction circonférentielle de la bague magnétique multipolaire (2).

4. Détecteur d'angle de rotation (1) selon l'une quelconque des revendications 1 à 3, dans lequel N est égal à 3.

5. Capteur de couple (11) comprenant des détecteurs d'angle de rotation (1), chacun d'eux étant un détecteur d'angle de rotation (1) selon l'une quelconque des revendications 1 à 4, dans lequel
les détecteurs d'angle de rotation (1) sont disposés sur un axe d'entrée (9) et un axe de sortie (10) reliés par une barre de torsion, respectivement, pour détecter un angle de rotation de l'axe d'entrée (9) et un angle de rotation de l'axe de sortie (10), et
le capteur de couple (11) est configuré pour calculer une différence entre l'angle de rotation de l'axe d'entrée (9) et l'angle de rotation de l'axe de sortie (10) détectés par les détecteurs d'angle de rotation (1) en tant qu'angle de torsion.

6. Capteur de couple (11) selon la revendication 5, dans lequel l'axe d'entrée (9) et l'axe de sortie (10) sont respectivement un axe d'entrée (9) et un axe de sortie (10) d'un système de direction d'un véhicule.
